# EUROPEAN PATENT SPECIFICATION

(11) **EP 1 931 581 B1**
(45) Date of publication and mention of the grant of the patent: **19.08.2009**
(21) Application number: 06791441.6
(22) Date of filing: 04.10.2006
(51) Int. Cl.: B65G 21/20, B65G 15/58, B65H 29/24, B65H 5/22

(54) **A VACUUM HOLDING- DEVICE**
VAKUUMHALTEVORRICHTUNG
DISPOSITIF DE MAINTIEN PAR LE VIDE

(30) Priority: 04.10.2005 DK 200501401
(43) Date of publication of application: 18.06.2008
(73) Proprietor: Nissen, Richard, 8900 Randers (DK)
(72) Inventor: Nissen, Richard, 8900 Randers (DK)
(86) International application number: PCT/DK2006/000550
(87) International publication number: WO 2007/038928

(56) References cited:
- EP-A2- 0 121 432
- US-A- 5 326 219

## Description

The invention relates to a vacuum holding device for the lifting and/or transport of objects, such as plywood sheets or metal plate, said device comprising vacuum cups made from flexible material mounted on a perforated band or belt, for the passage of air, which is sucked from the base of the cups, to generate a vacuum for holding the object by engagement and contact with it.

Various forms of vacuum suction cups and vacuum conveyor belts are already known, as in DE 2939571 A1 and EP 1205408 A1 where build-in vacuum valves are controlling the holding of items. Document US 5 326 219 A discloses a vaccum holding device according to the preamble of claim 1.

Such valves, however are vulnerable to clogging and following malfunctions, especially in industries like woodworking, where shavings and sawdust are laying around, but as such system mostly is used for objects being transported on the top of vacuum belts, it is not the cause of much damage if only a part of the vacuum system is out of order.

Suction cups are also an important part of robot handling where stacking and moving of items are frequently done with items hanging underneath the suction cups, so here it could be a problem as most of the valve systems are opening by the touch of the object, and the object will be lost on the floor if the valve is clogged.

In the handling by robots, the lifting device will be going backward and forward which means that half of the time is lost. In the following system the handling is continuous and dependable.

Another disadvantage in the use of robots is the safety measurements to be taken and the fences surrounding them. It takes not only space, but it is also a problem for the maintenance and handling.

The new invention takes no more space than a roller conveyor and it can even be put underneath.

### The purpose of the invention

The purpose of the invention is to remedy these disadvantages. This is achieved by the invention in that the vacuum belt has the features as stated in the appended claim 1.

Said device has suction cups either mounted separately, in groups or mounted on belts for lifting and/or transportation.

The suction cups are based on latent tension In the valve part as each suction cup has leaves that are held in a latent tension by the vacuum force behind it so that the protruding leaves only need a light pressure in order to be opened, and the object is then firmly held in the vacuum cup under neath. The leaves are meeting each other at an angle which angle together with the elasticity has to match the vacuum so the vacuum does not open them until they are touched by the object.

No valves to service, no valves to clog, so due to no leaks a very high vacuum is now possible for the lifting and transportation of objects fastened and hanging underneath a conveyor and easy to release when needed.

It is an advantage that the latent tension is a little higher than the vacuum force keeping it closed in order to achieve a low force for the opening.

By arranging the vacuum belt according to the invention as mentioned in claim 2, a vacuum belt is achieved which is especially oriented toward Industrial use where high holding force is needed, where dust and chips are abundant and when objects hanging underneath suction discs or -belts are advantageous for stacking or un-stacking of sheath material handling like plywood and metal plates. This adds a new dimension to material handling when such handling can be done in continuity within the same line and area of conveying. No robots, no sideways offloading, just let it pass underneath for assorting in as many stacks as necessary.

Such ways of transportation do not only save space, but it opens up for a new way of thinking when it comes to the replacement of robots in stacking or moving. It handles the objects in a continuous process. It does not need to go back for the next one.

As vacuum is a very elusive matter, so by not having teaks and open valves to worry about, it is now possible to use even very high vacuums and thereby making handling of heavy objects possible.

When, as mentioned in claim 3, an object reach the end of the conveyor, beyond the vacuum chamber, it is important that the leaves of the suction cups are put back into position. This is done in the following way. Both wheels of the vacuum belt have knobs, fitting into the inside of the suction cups so that the leaves are put back into shape when passing. When both the wheels are equipped it is due to the vacuum belt being able to go both backwards or forwards for either stacking or un-stacking with the same machinery.

When, as mentioned in claim 4, an object is unloaded on its way underneath the vacuum belt, there is a hollow beam, where an air source in connection with the bottom chamber will block the vacuum and at the same time unload the object. Simultaneously, the air will re-generate the leaves of the suction cups, thereby blocking for loss of vacuum and also making the suction cups ready for a new lift.

According to claim 5 the valve system can be made as a casting or weaved of stretched elastic material to obtain an airtight structure.

A latent tension is obtained by the vacuum, holding it unto a soft and porous bed.

When an object is pressed into it, the strings or bands will spread and open for the vacuum between them.

If the strings or bands are ribbed or rough the vacuum will spread further and thereby give a higher holding force of the objects.

According to claim 6, the valve system consists of numerous lips, cut or cast in an elastic material with an already built-in latent tension, if cut during stretching or casting. The vacuum mat or belt rests on a porous and soft bed.

The lips are spread over the surface of the elastic matting, and the vacuum behind them will further intensify the latent tension.

When an object is pressed onto the lips, they will open for the vacuum and the object will be pulled even deeper into the porous and soft bed, intensifying the hold. The surface can be cast in a rough pattern, so the vacuum will spread, depending on the shapes of the objects to be held or transported.

Claims 5 and 6 are mainly solutions for small objects of either curved or uneven shapes.

### The drawings

Examples of the devices according to the invention will be described more fully below with reference to the drawings in which
- Fig. 1: shows a cross section of the suction cup mounted onto a steel-band, passing the wheel for the reshaping of the structure, as seen in the direction I-I on fig. 2,
- fig. 2: shows the suction cup seen from above,
- fig. 3: shows a wheel with rods and a belt with suction cups which hold a plate,
- fig.4: shows a cross section through an elastic fibre band with suction openings, as seen in the direction IV-IV on fig. 5 and
- fig. 5: shows the band seen from above in a partial cross section.

### Description of the exemplary embodiments

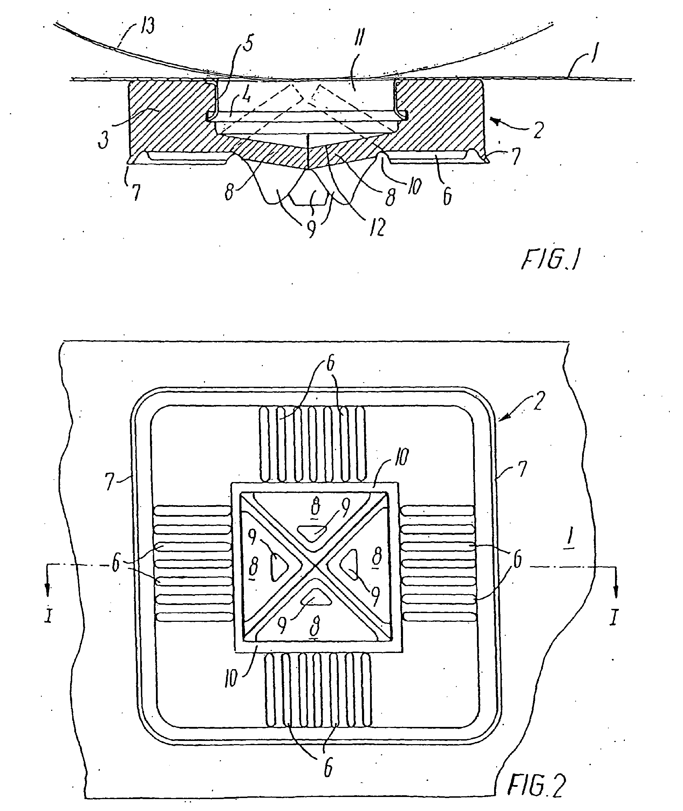

Fig. 1 and 2 shows a suction cup 2 seen in a cross section passing the wheel 13 and the knobs 11, and where one punctuated leaf is seen open, showing how the suction cup 2 is constructed.

In the centre are four leaves 8 shown. At that angle they resist the 250m/m of vacuum - giving them a latent (or dormant) tension.

The tension is released when an item is pressed against the lips 9, opening for the vacuum, holding the object against the soft edge 7 of the suction cup 2.

The suction cup 2 has ribs 6, allowing the vacuum to be spread to the whole area of the suction cup.

Where the leaves 8 meet the base of the suction cup 2, which can be inserted in a groove 4 in the suction cup 2, they are slightly thinner 10 so the leaf 8 is bent at a sharp angle and not in a curve, in order to get a maximum opening.

The suction cup 2 is mounted onto a steel band 1 by means of elastic flaps in such a way that the suction cup 2 can be mounted in any of the four positions.

The wheel 13 has pyramid shaped teeth 11, fitting into the suction cups 2 for the re-generation of the latent tension.

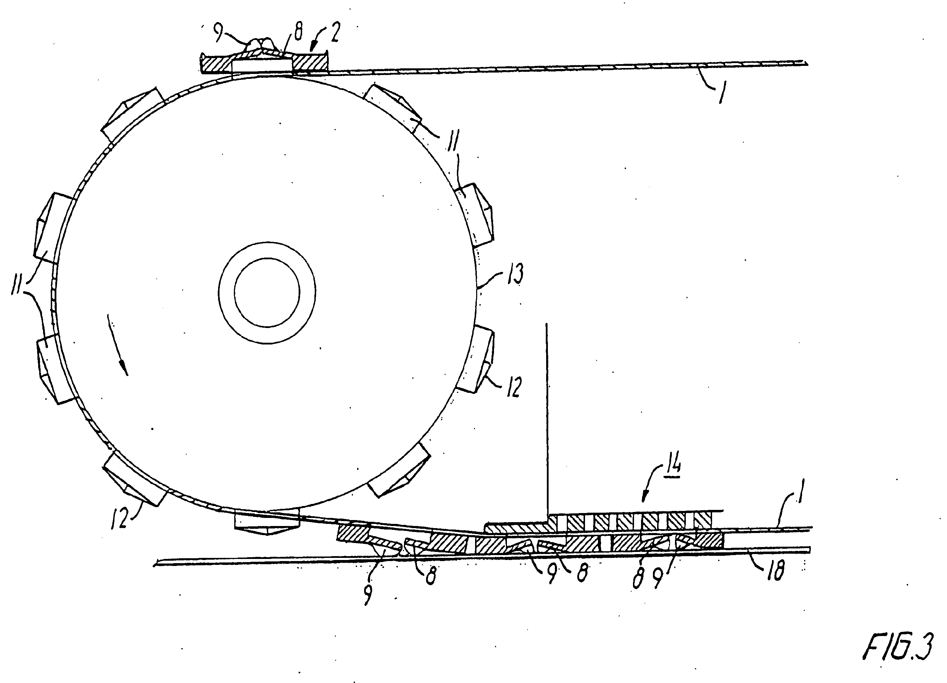

Fig. 3 shows a cross section of a vacuum belt 1 consisting of a steel band with suction cups 2 transporting an object 16, for instance from a stack.

The wheel 13 has knobs 11 with conical top 12 so that the original shape of the leave 8 for obtaining the latent tension underneath the vacuum chamber is achieved.

The vacuum chamber 14 has a non-friction perforated bottom and inside is shown a hollow beam which is operated with an air cylinder through a vent. The air can blow the item off when necessary, reshape the suction cups 2 and clean the system for chips, etc.

It can be running both ways for either stacking or un-stacking.

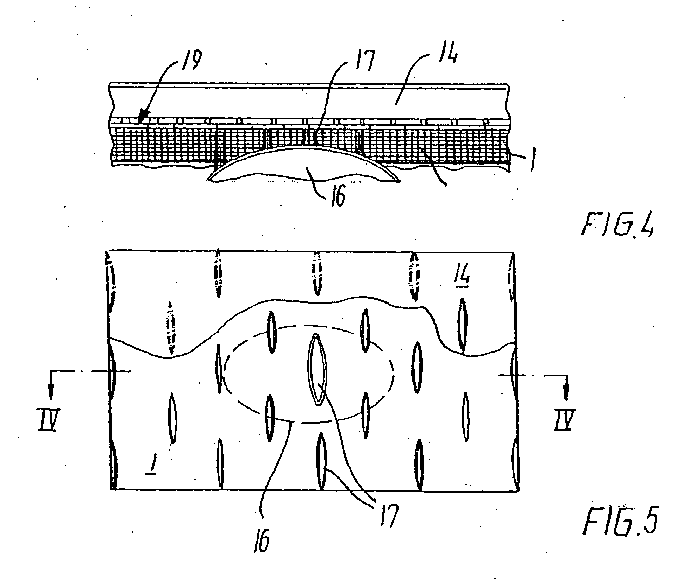

Fig. 4 and 5 are other embodiments and show a fabric made from elastic fibers or bands made by weaving or moulding.

Underneath is a porous cushion 19 to allow for the vacuum resting on a perforated band which again is either for transportation as a belt or as a part of a vacuum chamber 14.

The structure will open the vacuum when an item 16 is pressed onto it.

Fig. 5 shows an elastic mat or belt 1 with cuts like lips 17. The lips can be spaced at random in the mat 1. Underneath is a porous cushion to allow for the vacuum to go through, resting on a perforated band which again is either for transportation as a belt or as a part of the vacuum chamber 14.

The lips 17 will open for the vacuum when an object 16 is pressed against it, as seen on fig. 4.

## Claims

1. A vacuum holding device for the lifting and/or transport of objects (16, 18), such as plywood sheets or metal plate, said device comprising vacuum cups (2) made from flexible material mounted on a perforated band or belt (1), for the passage of air, which is sucked from the base of the cups (2) to generate a vacuum for holding the object (16, 18) by engagement and contact with it, **characterized in that** the vacuum belt (1) has built-in valves (2, 17) which have leaves (9, 17) on the valve part (8,17) for the opening of these parts by pressing against or into the belt (19) when the leaves come into contact with the object (16, 18).

2. A vacuum holding device according to the claim 1, **characterized in that** the leaves (8, 9) function as a valve mechanism, contains a latent tension created by the vacuum behind and meet each other at an angle so when the item to be held touches those leaves (9), the leaves (8) open up for the access of the vacuum to the area of the suction cup (2) holding the object (18).

3. A vacuum holding device according to claim 2, **characterized in that** the leaves (8, 9) of the latent suction cup (2) after having released the object (18) are brought back to the original position and shape, when passing inside closely fitting knobs (11, 12) which are mounted un the wheels (13) conveying the band (1) of the latent suction cups (2).

4. A vacuum holding device according to claims 2 and 3, **characterized in that** an existing source of air inside the vacuum chamber (14) brings the leaves (8, 9) of the latent suction cup (2) back to the original position and shape by simultaneously offloading the object.

5. A vacuum holding device according to claim 1, **characterized in that** the valve part (17) is built into a web of elastic fibers (19) resting on a layer of porous cushioning material, the vacuum behind (14) creating a latent tension, until said tension is relieved by an object (16) pressed into the fabric (19) and the opening (17) thereby achieved, allowing the vacuum to hold the object (16).

6. A vacuum holding device according to claim 5, **characterized in that** the valve part (17) is built into a flexible material (19) resting on a porous cushioning material, where there are lips (17) molded into the material ur cut in much a way that they contain a latent tension, created by the vacuum behind and which tension brings the lips (17) to open, when an object (16) is pressed into it, thereby allowing the vacuum to hold the object (16).

## Patentansprüche

1. Eine Saughaltevorrichtung zum Heben und/oder Transportieren von Objekten (16, 18) wie Sperrholz- oder Metallplatten, wobei die besagte Vorrichtung aus zwei Vakuumschalen (2) aus flexiblem Material besteht, die auf ein perforiertes Band oder Fließband (1) montiert werden, so dass Luft, die vom Boden der Schalen aus angesaugt wird (2), passieren kann, um ein Vakuum zu erzeugen, durch welches das Objekt gehalten wird (16, 18), indem es überdeckt und Kontakt zu ihm hergestellt wird, **charakterisiert dadurch**, dass das Vakuumfließband (1) über eingebaute Ventile (2, 17) mit Blättern (9, 17) an den Ventilteilen (8, 17) zum Öffnen dieser Teile durch Drücken gegen oder in das Fließband (19) verfügt, wenn die Blätter in Kontakt mit dem Objekt gelangen (16, 18).

2. Eine Saughaltevorrichtung gemäß Anspruch 1, **charakterisiert dadurch**, dass die Blätter (8, 9) als Ventilmechanismus funktionieren, indem sie eine latente Spannung enthalten, die durch das dahinter liegende Vakuum erzeugt wird, da die Blätter in einem Winkel aufeinander treffen, so dass, wenn der zu haltende Gegenstand diese Blätter berührt (9), die Blätter (8) sich öffnen und dem Vakuum Zugang zum Bereich der Saugschale (2) geben, die das Objekt (18) hält.

3. Eine Saughaltcvorrichtung gemäß Anspruch 2, **charakterisiert dadurch**, dass die Blätter (8, 9) der latenten Saugschale (2), nachdem das Objekt abgelegt worden ist (18), wieder in die Ausgangsposition und -form zurück gebracht werden, wenn sie innen an eng anliegenden Noppen (11) vorbeifahren, die an den Rändern (13) des Förderbandes (1) der latenten Saugschalen (2) montiert sind.

4. Eine Saughaltevorrichtung gemäß der Ansprüche 2 und 3, **charakterisiert dadurch**, dass eine im Inneren der Vakuumkammer (14) bestehende Luftquelle bei gleichzeitigem Abladen des Objekts die Blätter (8, 9) der latenten Saugschale (2) wieder in die ursprüngliche Position und Form zurückbringt.

5. Eine Saughaltevorrichtung gemäß Anspruch 1, **charakterisiert dadurch**, dass das Ventilteil (17) in ein Gewebe aus elastischen Fasern (19) eingebaut ist, das auf einer Schicht aus porösem Polsterungsmaterial lagert, so dass das dahinter liegende Vakuum (14) eine latente Spannung erzeugt, bis die besagte Spannung durch ein Objekt (16) gelöst wird, das in das Gewebe (19) gedrückt wird, und die **dadurch** erzielt Öffnung (17) dem Vakuum ermöglicht, das Objekt (16) zu halten.

6. Eine Saughaltevorrichtung gemäß Anspruch 5, **charakterisiert dadurch**, dass das Ventilteil (17) in ein elastisches Material (19) eingebaut ist, das auf einer Schicht aus porösem Polsterungsmaterial lagert, bei dem Lippen (17) in das Material modelliert oder derart geschnitten sind, dass sie eine latente Spannung aufrecht erhalten, die durch das dahinter liegende Vakuum erzeugt wird und welche die Lippen (17) dazu bringt, sich zu öffnen, wenn ein Objekt (16) hinein gepresst wird, so dass das Vakuum dann das Objekt (16) halten kann.

## Revendications

1. Système de suspension par aspiration pour soulever et/ou transporter des objets (16,18) tels que des panneaux de contre-plaqué ou des plaques métalliques, ledit système étant composé de ventouses (2) fabriquées dans un matériau flexible et fixées sur une bande ou courroie perforée (1), pour le passage de l'air, qui est aspiré à la base des ventouses (2) afin de créer un vide permettant de maintenir l'objet (16, 18) en entrant en contact avec l'objet, **caractérisé en ce que** la courroie d'aspiration (1) comporte des valves intégrées (2, 17) dotées de clapets (9, 17) sur la valve (8,17) afin de pouvoir ouvrir ces parties en exerçant une pression contre ou dans la courroie (19) lorsque les clapets entrent en contact avec l'objet (16, 18).

2. Système de suspension par aspiration selon la revendication 1, **caractérisé en ce que** les clapets (8, 9) fonctionnent en tant que mécanisme de valve, comprenant une tension latente créée par l'aspiration carrière, et se rencontrent à un certain angle de sorte que lorsque l'élément à suspendre touches ces clapets (9), les clapets (8) s'ouvrent pour que l'aspiration puisse accéder à la zone de la ventouse (2) qui maintient l'objet (18).

3. Système de suspension par aspiration selon la revendication 2, **caractérisé en ce que** les clapets (8, 9) de la ventouse latente (2) après avoir dégagé l'objet (18) retrouvent leur position et leur forme initiales lors du passage à l'intérieur de boutons bien serrés (11, 12) fixés sur les roues (13) qui transportent la bande (1) des ventouses latentes (2).

4. Système de suspension par aspiration selon les revendications 2 et 3, **caractérisé en ce que** la source d'air existante à l'intérieur de la chambre à vide (14) rétablit les clapets (8, 9) de la ventouse latente (2) dans leur position et forme d'origine, en relâchant simultanément l'objet.

5. Système de suspension par aspiration selon la revendication 1, **caractérisé en ce que** la partie de la valve (17) constitue un tissage de fibres élastiques (19) reposant sur une couche de matériau poreux d'amortissement, l'aspiration arrière (14) créant une tension latente, jusqu'à ce que ladite tension soit relâchée lorsqu'un objet (16) exerce une pression contre le tissu (19) et l'ouverture (17) ainsi obtenue, permettant ainsi à l'aspiration de maintenir l'objet (16).

6. Système de suspension par aspiration selon la revendication 5, **caractérisé en ce que** la valve (17) est fabriquée dans un matériau flexible (19) sur une couche de matériau poreux d'amortissement comprenant des lèvres (17) moulées dans le matériau ou découpées de telle sorte qu'elles contiennent une tension latente créée par l'aspiration arrière, et cette tension fait s'ouvrir les lèvres (17) lorsqu'un objet (16) s'appuie contre elles, permettant ainsi à l'aspiration de maintenir l'objet (16).
